# EUROPÄISCHE PATENTSCHRIFT

(11) **EP 1 541 606 B1**
(45) Veröffentlichungstag und Bekanntmachung des Hinweises auf die Patenterteilung: **14.05.2008**
(21) Anmeldenummer: 04027811.1
(22) Anmeldetag: 24.11.2004
(51) Int. Cl.: C08G 18/63, C08F 283/02

(54) **Polymerdispersionen in Polyesterpolyolen**
Polymer dispersions in polyesterpolyols
Dispersions de polymère dans des polyesterpolyols

(30) Priorität: 06.12.2003 DE 10357159
(43) Veröffentlichungstag der Anmeldung: 15.06.2005
(73) Patentinhaber: Bayer MaterialScience AG, 51368 Leverkusen (DE)
(72) Erfinder: Nefzger, Hartmut, Dr., 50259 Pulheim (DE); Bauer, Erika, 41363 Jüchen (DE); Michels, Erhard, Dr., 51061 Köln (DE); Perchenek, Nils, Dr., 51373 Leverkusen (DE)

(56) Entgegenhaltungen:
- DE-A1- 10 106 567
- US-A- 3 294 711

## Beschreibung

Die vorliegende Erfindung betrifft Polymerdispersionen in Polyesterpolyolen, ein Verfahren zu ihrer Herstellung und deren Verwendung zur Herstellung von Polyurethanen, insbesondere mikrozellulären Polyurethanen.

Dispersionen fester, hochmolekularer Polymeren in Polyolen (Polymerpolyole) werden häufig zur Herstellung flexibler Polyurethan-Schaumstoffe eingesetzt. Vorteilhaft ist hierbei beispielsweise, dass die Offenzelligkeit dieser Schaumstoffe erhöht wird und die mechanischen Eigenschaften als Folge der erhöhten Härte verbessert werden. Zu nennen sind in diesem Zusammenhang Weiterreißfestigkeit, Zugspannung und Druckverformungsrest (Compression Set). Hierdurch wird die Einstellung einer verminderten Dichte unter Erhalt der sonst nur mit höherer Dichte erreichbaren Eigenschaften möglich. Dadurch lässt sich eine signifikante Materialeinsparung und somit Kostenreduktion realisieren.

Dispersionen von Polymeren in Polyolen sind literaturbekannt, wobei neben den durch Umsetzung von Olefingruppen enthaltenden Monomeren in Polyolen erhältlichen Dispersionen auch andere Typen von Dispersionen beschrieben sind, z.B. solche, die aus Diaminen und Polyisocyanaten hergestellt werden. Ebenso wird deutlich, dass es sich bei den verwendeten Polyolen meistens um Polyether mit Molmassen von 1000 bis 10000 g/mol handelt, dagegen seltener um Polyesterpolyole. Ein Grund hierfür mag in der vergleichsweise hohen Viskosität liegen, die die Polyesterpolyole selbst und insbesondere auf Polyesterpolyolen basierende Dispersionen im Vergleich zu entsprechenden auf Polyetherpolyol basierenden Systemen aufweisen. Dennoch besteht ein technisches Interesse an den auf Polyesterpolyolen basierten Dispersionen, insbesondere deswegen, weil daraus hergestellte Polyurethansysteme in vielerlei Hinsicht bessere mechanische Eigenschaften aufwiesen als die entsprechenden Polyurethane auf Polyetherbasis.

US-A 3 294 711 offenbart die Herstellung von Pfropfpolymeren durch radikalische Polymerisation von Vinylverbindungen wie Vinylacetat oder Vinylchlorid in Gegenwart gesättigter Polyesterpolyole.

DE-OS 101 06 567 lehrt die Herstellung von wässrigen Polymerdispersionen durch radikalische Mikro- und Miniemulsionspolymerisation olefinisch ungesättigter Monomeren in Gegenwart von hydrophoben Zusatzstoffen, beispielsweise Polyesterpolyolen.

Für wässrige Systeme mit der Anwendung der hitzehärtbaren Einbrennlacke beschreibt DE-OS 44 27 227 die Verwendung von in Wasser dispergierten, mit Polymerisaten aus olefinischen Monomeren gefüllten Polyesterpolyolen als eine der Systemkomponenten.

Wird als vinylisches Monomer Styrol in derartigen Systemen eingesetzt, so sind auf Grund von dessen im Vergleich zu Acrylnitril niedriger Reaktivität und der auf viele Molekülspezies geringeren Kettenübertragungsgeschwindigkeit ansonsten analoge Dispersionen weniger stabil. Demzufolge erfordert der Einsatz von Styrol als radikalisch polymerisierbares vinylisches Monomer zur Herstellung von Dispersionen auf Polyesterpolyolbasis den Einbau von Pfropfstellen in die bzw. am Ende der Polyestermoleküle. Dies gilt insbesondere, wenn ausschließlich Styrol als vinylisches Monomer eingesetzt wird. Solche Pfropfstellen müssen die Kettenübertragung der radikalisch wachsenden Polymermoleküle unter Bildung kovalenter Bindungen und wenn möglich unter Erhalt der wachsenden Radikalkette gewährleisten.

Einige Beispiele für derartige Modifizierungen sind in EP-A 250 351 aufgeführt. So kann z.B. der Einbau von Maleinsäureanhydrid in die Polyesterpolyolkette diese Funktion ausfüllen. EP-A 0 250 351 offenbart ein Verfahren, bei dem in einem Polyesterpolyol der Molmasse 1000 bis 5000 g/mol mindestens ein ethylenisch ungesättigtes Monomer polymerisiert wird. Das Polyesterpolyol enthält hierbei neben den üblichen Bausteinen Polycarbonsäure und Polyalkohol auch olefinische Bestandteile, insbesondere den Baustein Maleinsäureanhydrid.

Nachteilig am Einbau derartiger, die freie Beweglichkeit der Segmente der Polyesterkette verringernder, ungesättigter Polycarbonsäuren, bzw. Anhydriden ist jedoch die damit verbundene Viskositätserhöhung der eingesetzten Polyesterpolyole bzw. Polyesterpolyolgemische. In gleicher Weise wirkt auch die durch Einbau von Maleinsäure in die Polyesterkette erhöhte Konzentration an polaren Estercarbonylfunktionen viskositätserhöhend. Die erhöhte Viskosität schränkt die Verwendbarkeit der schon per se höherviskosen Polyesterpolyole weiter ein.

Neben diesen Nachteilen zeigt sich in der industriellen Praxis, dass die mit ungesättigten Bausteinen modifizierten Polyesterpolyole in sehr vielen Fällen grobteilige Dispersionen ergeben, die meist mit dem bloßen Auge sichtbare Partikel enthalten und oft schwer filtrierbar sind.

JP 56/081319 A offenbart ein Verfahren zur Herstellung eines Latex für ein serodiagnostisches Reagens, das keine unspezifische Agglutinierungsreaktion zeigt. Hierzu wird Styrol in wäßriger Phase mit bis zu 70 Gew.-%, bezogen auf die Styrolmenge, eines Monoallylmonoalkylesters einer Sulfonatobernsteinsäure copolymerisiert.

US-A 3 845 024 offenbart ein kontinuierliches, zweistufiges Verfahren zur Herstellung von Fluorpolymeren. Hierzu werden in einem ersten Schritt fluorhaltige Monomere in wässriger Phase radikalisch zu einem Copolymer mit hohem Molekulargewicht polymerisiert. In einem zweiten Schritt wird dieses hochmolekulare Copolymer in wässriger Phase mit weiterem Monomer versetzt, das radikalisch unter Zusatz eines Kettenüberträgers zu einem Copolymer polymerisiert wird, das ein niedrigeres Molekulargewicht aufweist als das in der ersten Stufe hergestellte Copolymer. Das Copolymer wird anschließend von der wässrigen Phase abgetrennt und getrocknet. Diethylmalonat wird als bevorzugter Kettenüberträger bzw. Molekulargewichtsregler vorgeschlagen, der dafür sorgt, dass in der zweiten Stufe des Prozesses ein Polymer mit niedrigerem mittleren Molekulargewicht als in der ersten Stufe erzeugt wird.

Ein besonderer wirtschaftlicher Aspekt ergibt sich dadurch, dass für alle bisher beschriebenen Verfahren immer zunächst einmal ein phasenstabilisierender Zuschlagstoff in getrennter Reaktion hergestellt werden muß. Idealerweise stünde ein derartiger Zuschlagsstoff in praktisch beliebiger Menge zu günstigem Preis großtechnisch zur Verfügung. Weiterhin wäre er dadurch gekennzeichnet, dass unverbrauchte Anteile möglichst vollständig und auf möglichst einfache Weise aus dem Reaktionsprodukt entfernbar wären.

Aufgabe der vorliegenden Erfindung war es daher, ein verbessertes Verfahren zur Herstellung von Polymerpolyolen auf Polyesterbasis zur Verfügung zu stellen. Es wurde nun gefunden, daß der Zusatz von doppelt aktivierten Methylenverbindungen eine derartige technische Lösung darstellt.

Gegenstand der Erfindung ist daher ein Verfahren zur Herstellung von Polymerdispersionen durch radikalische Polymerisation olefinisch ungesättigter Monomere in Gegenwart von doppeltaktivierten Methylenverbindungen der allgemeinen Formel

R¹-CH₂-R² (I)

wobei R¹ und R² gleiche oder verschiedenartige Reste sein können.

R', R² können hierbei sein: -CONH₂, -CN oder -COOR, mit R³ = Alkyl, insbesondere Methyl, Ethyl, Propyl, Butyl, tert.-Butyl, Benzyl, oder cyclo-Isopropyliden.

Besonders bevorzugt sind Malonsäureester.

Insgesamt beträgt der Anteil der doppelt aktivierten Methylenverbindung am gesamten Reaktionsansatz, inklusive etwaiger Lösemittel und etwaigem Nachsatz an Polyesterpolyol weniger als 5 Gew.-%, bevorzugt weniger als 3 Gew.-%, besonders bevorzugt weniger als 2 Gew.-%.

Das Basis-Polyesterpolyol wird aus Komponenten hergestellt, die keine olefinischen Bestandteile aufweisen. Basis-Polyesterpolyole sind Hydroxylendgruppen aufweisende Polykondensationsprodukte aus Diolen und Dicarbonsäuren bzw. deren Anhydriden oder niedermolekularen Estern oder Halbestern, bevorzugt solchen mit monofunktionellen Alkoholen wie Methanol, Ethanol, 1-Propanol, 2-Propanol, 1-Butanol und 2-Butanol.

Beispiele für geeignete Diole sind Ethylenglykol, 1,2-Propandiol, 1,3-Propandiol, 2-Methyl-1,3-propandiol, 1,4-Butandiol, 1,5-Pentandiol, 3-Methyl-1,5-pentandiol, 1,6-Hexandiol, 1,8-Octandiol, 1,10-Decandiol, Neopentylglykol, Diethylenglykol, Triethylenglykol, Tetraethylenglykol usw. Geeignet sind auch Polyetherpolyole mit zahlenmittleren Molmassen von 250 bis 4500 g/mol, insbesondere solche, die überwiegend von 1,2-Propylenoxid abgeleitete Einheiten enthalten. Entsprechend sind auch Etheroligomere des Butandiols wie Dibutylenglykol, Tributylenglykol, bzw. entsprechende, durch ringöffnende Polymerisation des Tetrahydrofurans erhältliche Diole mit zahlenmittleren Molmassen von 240 bis 3000 g/mol als Diole einsetzbar. Entsprechende Verbindungen des 1,6-Hexandiols, Di- und Trihexylenglykol, bzw. Oligomerengemische, die durch azeotrope Verätherung des 1,6-Hexandiols erhalten werden können, sind ebenfalls geeignet.

Daneben können auch bis zu 5 Gew.-% höherfunktionelle Polyole mitverwendet werden, beispielsweise 1,1,1-Trimethylolpropan, Glycerin oder Pentaerythrit, sowie auf diesen gestartete Polypropylenoxid- und Polyethylenoxidpolyole mit zahlenmittleren Molmassen von 250 bis 4500 g/mol.

Als Dicarbonsäuren ohne Olefingruppierung können aliphatische und aromatische Verbindungen einzeln oder im Gemisch verwendet werden. Beispielhaft seien genannt: Bernsteinsäure, Glutarsäure, Adipinsäure, Pimelinsäure, Suberinsäure, Sebacinsäure, Phthalsäure, Isophthalsäure, Terephthalsäure. Daneben können auch deren Anhydride sowie deren Ester oder Halbester mit niedermolekularen, insbesondere monofunktionellen Alkoholen eingesetzt werden.

Analog können auch Ester von cyclischen Hydroxylcarbonsäuren, bevorzugt solche, die aus ε-Caprolacton hergestellt werden können, eingesetzt werden.

Entsprechend können auch Polyester der Kohlensäure, also Polycarbonatpolyole verwendet oder mitverwendet werden. Diese können hergestellt werden durch Umesterung von Dimethylcarbonat oder Diphenylcarbonat mit Diolen und Triolen, sowie durch Umesterung mit hydroxylendständigen Oligoester- und Oligoetherdiolen mit zahlenmittleren Molmassen von 200 bis 1000 g/mol.

Die erfindungsgemäß zu verwendenden Polyesterpolyole weisen eine mittlere Hydroxylfunktionalität von 1,8 bis 3, bevorzugt 1,85 bis 2,7, besonders bevorzugt 1,9 bis 2,5 auf, sowie eine zahlenmittlere Molmasse von 1000 bis 5000, bevorzugt 1300 bis 4800, besonders bevorzugt 1600 bis 4500 g/mol auf.

Werden mehrere Polyesterpolyole verwendet, so beziehen sich die im obigen Absatz genannten Grenzen bzgl. der Molmasse auf das Polyesterpolyolgemisch. In diesem Fall kann selbstverständlich das zahlenmittlere Molekulargewicht wenigstens einer der Einzelkomponenten auch außerhalb der angegebenen Grenzen, z.B. im Bereich von 450 bis 1600 g/mol liegen.

Weiterhin können die Basis-Polyesterpolyole auch dadurch modifiziert werden, dass nieder-molekulare Diole oder Diolgemische mit zahlenmittleren Molmassen von 62 bis 400 g/mol, die keine Estergruppen tragen, den verwendeten Estern zugemischt werden. Diese Abmischung kann auch nach beendeter radikalischer Polymerisation zur an sich fertigen Dispersion erfolgen.

Beispiele geeigneter radikalisch polymerisierbarer Vinyl-Monomere sind Styrol, alpha-Methylstyrol, Ethylstyrol, Vinyltoluol, Divinylbenzol, Isopropylstrol, Chlorostyrol, Butadien, Isopren, Pentadien, Acrylsäure, Methacrylsäure, Methacrylsäuremethylester, Vinylacetat, Acrylnitril, Methylvinylketon oder Kombinationen dieser Verbindungen. Bevorzugt eingesetzt werden Styrol, alpha-Methylstyrol, Acrylnitril, Methacrylnitril, Methacrylsäurealkylester mit C₁-C₃₀-Alkylresten (z.B. Methyl-, Ethyl-, Butyl-, Hexyl-, Dodecyl- usw). Besonders bevorzugt sind Styrol und Acrylnitril, wobei das Styrol bevorzugt in einem Anteil von mehr als 75 Gew.-% verwendet wird, besonders bevorzugt von mehr als 90 Gew.-%.

Der Anteil dieser erfindungsgemäß zu verwendenden radikalisch polymeriserbaren Vinyl-Monomeren am Gesamtansatz, d.h. der Füllgrad der fertigen Dispersion, beträgt erfindungsgemäß 2 bis 55 Gew.-%, bevorzugt 4 bis 40 Gew.-%, besonders bevorzugt 5 bis 33 Gew.-%. Der Füllgrad ist durch Nachverdünnung mit einem zweiten Basis-Polyesterpolyol einstellbar.

In einer bevorzugten Ausführungsform werden als Basis-Polyesterpolyol zwei unterschiedliche Polyesterpolyole eingesetzt, die sich mindestens bezüglich ihres zahlenmittleren Molekulargewichtes unterschieden, wobei das Polyesterpolyol mit dem kleineren Molekulargewicht erst dann zugemischt wird, wenn die radikalische Polymerisation des vinylischen Monomeren im Gemisch von Polyesterpolyol mit höherem Molekulargewicht beendet ist.

Für die Initiierung der radikalischen Polymerisation werden an sich bekannte Radikalstarter verwendet. Beispiele aus der Gruppe der Azo-Initiatoren sind alpha, alpha'-azo-2-Methylbutyronitril, alpha,alpha'-azo-2-Heptonitril, 1,1'-azo-1-Cyclohexancarbonitril, Dimethyl-alpha,alpha'-azo-isobutyrat, 4,4'-azo-4-cyanopentansäure, Azo-bis(2-methylbutyronitril), Azo-bis-isobutyronitril. Aus der Gruppe der Peroxide, Persulfate, Perborate, Percarbonate seien beispielhaft genannt: Dibenzoylperoxid, Acetylperoxid, Benzyolhydroperoxid, t-Butylhydroperoxid, Di-t-Butylperoxid, 2-Ethylhexansäure-tert.-butylperester, Diisopropylperoxydicarbonat, usw.

Die Polymerisation wird typischerweise in Anwesenheit eines Lösungsmittels ausgeführt, kann aber auch ohne Lösungsmittel bewerkstelligt werden. Als Lösungsmittel können beispielsweise eingesetzt werden: Benzol, Toluol, Xylol, Acetonitril, Hexan, Heptan, Dioxan, Ethylacetat, N,N-Dimethylformamid, N,N-Dimethylacetamid, etc. Bevorzugt sind Benzol, Xylol und Toluol.

Gegenstand der Erfindung sind auch die nach den erfindungsgemäßen Verfahren erhaltenen Polymerdispersionen. Die erhaltenen Produkte sind weiße Dispersionen, die ein hochmolekulares Polymer oder Copolymer, ein konventionelles, bei Raumtemperatur festes oder bevorzugt flüssiges Polyesterpolyol und ein zur Phasenstabilisierung notwendiges weiteres modifiziertes Polyesterpolyol enthalten. Sie können beispielsweise bei einem Füllgrad von 25 Gew.-% Polystyrol und einer OH-Zahl von 50 bis 60 Viskositäten von 15 000 bis 35 00 mPas bei 25°C und 3000 bis 8000 mPas bei 50°C aufweisen. Die Viskosität ist proportional zur Viskosität des verwendeten Basis-Polyesterpolyols und umgekehrt proportional zur OH-Zahl.

Die erfindungsgemäß hergestellten Polymerpolyole eignen sich zur Herstellung von Polyurethanen, bzw. Polyurethan-Werkstoffen, insbesondere zur Herstellung mikrozellularer Polyurethan-Elastomere, wie sie für die Herstellung von Schuhsohlen Verwendung finden. Gegenstand der Erfindung sind auch Schuhsohlen enthaltend das Umsetzungsprodukt der erfindungsgemäßen Polymerdispersionen mit Polyisocyanaten oder Polyisocyanat-Prepolymeren.

Mit den erfindungsgemäßen Polymerdispersionen lassen sich Polyurethane erhalten, die gegenüber Polyurethanen, die ohne Polymerdispersion hergestellt werden, bei gleicher Dichte eine größere Härte aufweisen. Wenn neben der Dichte auch die Härte konstant gehalten werden soll, kann bei Einsatz der erfindungsgemäßen Polymerdispersionen mit einer deutlich verringerten Menge an Polyisocyanat gearbeitet werden.

### Beispiele

A.) Basis-Polyesterpolyole
B.) Herstellung erfindungsgemäßer Dispersionen
C.) Vergleichsbeispiel

### A.) Basis-Polyesterpolyole

### A.1. Desmophen^{®} 2003E, Bayer AG

Handelsübliches Polyadipat, hergestellt aus Adipinsäure und äquimolaren Anteilen an Ethylen-und Diethylenglykol mit einer OH-Zahl von ca. 56 mg KOH/g, sowie einer Viskosität von ca. 520 mPas (75°C).

### A.2. Basis-Polyesterpolyol mit hohem Molekulargewicht

2779 g (26,22 Mol) Diethylenglykol, 813 g (13,12 Mol) Ethylenglykol und 5452 g (37,12 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 27,8 mg KOH/g und die Säurezahl zu 0,8 mg KOH/g..

### A.3. Basis-Polyesterpolyol mit niedrigem Molekulargewicht

3177 g (29,97 Mol) Diethylenglykol, 932 g (15,03 Mol) Ethylenglykol und 5256 g (36 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 120,1 mg KOH/g und die Säurezahl zu 0,3 mg KOH/g.

### B.) Herstellung erfindungsgemäßer Polymerdispersionen

476 g eines Polyesterpolyols A.2. mit einer Hydroxylzahl von 27,8 mg KOH/g wurden mit 3 g Malonsäurediethylester, 100g Toluol und 1 g Azo-bis(2-methylbutyronitril) verrührt. Man leitete für 20 min. einen schwachen Stickstoffstrom durch die Lösung, gab 80 g Styrol zu und erwärmte unter Rühren im Verlauf von 30 min. auf 80°C. Nach 20 min. bei 80°C wurde die Temperatur in weiteren 30 min. auf 120°C erhöht.

Eine zuvor bereitete Lösung aus 600 g Polyesterpolyol A.2., 21 g Malonsäurediethylester, 200g Toluol, 6,4 g Azo-bis(2-methylbutyronitril) und 800 g Styrol wurden im Verlauf von 2 Std. bei einer Drehzahl von zunächst 300 U/min. zudosiert, wobei die Drehzahl nach 20 min. auf 350 U/min. und nach weiteren 40 min. auf 400 U/min. erhöht wurde. Nach Ende dieser Zudosierung ließ man 5 min. nachreagieren.

Eine weitere zuvor bereitete Lösung aus 38 g Polyesterpolyol A.2., 4 g Malonsäurediethylester, 100 g Toluol und 0,6 g Azo-bis(2-methylbutyronitril) wurde danach innerhalb von 30 min. zudosiert. Man ließ nach beendeter Zugabe für 2 Stunden bei 120°C nachreagieren.

Zur Aufarbeitung wurde an das Reaktionsgemisch zunächst Wasserstrahlvakuum angelegt, um das Lösungsmittel, eventuell nicht umgesetztes Styrol sowie Reste an freiem Malonsäurediethylester weitgehend zu entfernen. Zur Vervollständigung legte man Ölpumpenvakuum an, wobei nach 2 Std. bei 0,5 mbar sowohl Styrol als auch Toulol und Malonsäurediethylester weitestgehend entfernt waren.

Man bestimmte die Hydroxylzahl zu 17,2 mg KOH/g. Zur Einstellung der OH-Zahl, sowie des Füllgrades an Polystyrol verdünnte man anschließend mit 1108 g des Polyesterpolyols A.3.

Die erhaltene Dispersion war über ein 200µm Sieb filtrierbar, phasenstabil und wies bei 25°C eine Viskosität von 26500 mPas, bzw. bei 50°C von 5540 mPas auf; Füllgrad ca. 23,3 Gew.-%, OH-Zahl 57,7 mg KOH/g.

### C.) Vergleichsbeispiel

| | |
|---|---|
| Vorlage: | 476 g Polyesterpolyol A.1. |
| | 100 g Toluol |
| | 66 g Butandiol |
| | 0,6 g Azo-bis(2-methylbutyronitril) |
| | 80 g Styrol |

wurden bei 120°C vorgelegt. Analog Beispiel B. wurden folgende Gemische zudosiert:

| | |
|---|---|
| Zudosierung 1: | 600 g Polyesterpolyol A.1. |
| | 533 g Styrol |
| | 5,4 g Azo-bis(2-methylbutyronitril) |
| | 200 g Toluol |
| Zudosierung 2: | 38 g Polyesterpolyol A.1. |
| | 0,6 g Azo-bis(2-methylbutyronitril) |
| | 50 g Toluol |

Das Reaktionsprodukt war nicht filtrierbar.

## Patentansprüche

1. Verfahren zur Herstellung von Polymerdispersionen in Polyesterpolyolen durch radikalische Polymerisation olefinisch ungesättigter Monomere in Polyesterpolyolen ohne olefinisch ungesättigte Gruppen in Gegenwart einer doppelt aktivierten Methylenverbindung ohne olefinisch ungesättigte Gruppen.

2. Verfahren gemäß Anspruch 1, bei dem die doppelt aktivierte Methylenverbindung der allgemeinen Formel
R¹-CH₂-R²
genügt, wobei R¹ und R² gleiche oder verschiedenartige Reste aus der Gruppe der induktiv elektronenziehenden Substituenten sind.

3. Verfahren gemäß Anspruch 2, bei dem R¹ und R² unabhängig voneinander die Bedeutung -CONH₂, -CN oder -COOR³ haben, wobei R³ = Alkyl ist.

4. Verfahren gemäß einem der Ansprüche 1 bis 3, bei dem als olefinisch ungesättigte Monomere Styrol, alpha-Methylstyrol, Ethylstyrol, Vinyltoluol, Divinylbenzol, Isopropylstrol, Chlorostyrol, Butadien, Isopren, Pentadien, Acrylsäure, Methacrylsäure, Methacrylsäuremethylester, Vinylacetat, Acrylnitril, Methylvinylketon oder Kombinationen daraus eingesetzt werden.

5. Verfahren nach einem der Ansprüche 1 bis 4, bei dem Polycarbonatpolyole eingesetzt werden.

6. Polymerdispersion, erhältlich gemäß einem der Ansprüche 1 bis 5.

7. Verwendung von Polymerdispersionen gemäß Anspruch 6 zur Herstellung von Polyurethanen.

8. Schuhsohle enthaltend das Umsetzungsprodukt von Polymerdispersionen gemäß Anspruch 6 mit Polyisocyanaten.

## Claims

1. Process for the preparation of polymer dispersions in polyesterpolyols by the free-radical polymerization of olefinically unsaturated monomers in polyesterpolyols without olefinically unsaturated groups, in the presence of a double-activated methylene compound without olefinically unsaturated groups.

2. Process according to Claim 1 wherein the double-activated methylene compound has the general formula
R¹-CH₂-R²
in which R¹ and R² are identical or different radicals from the group comprising inductively electron-withdrawing substituents.

3. Process according to Claim 2 wherein R¹ and R² independently of one another are defined as -CONH₂, -CN or -COOR³, where R³ = alkyl.

4. Process according to one of Claims 1 to 3 wherein the olefinically unsaturated monomers used are styrene, alpha-methylstyrene, ethylstyrene, vinyltoluene, divinylbenzene, isopropylstyrene, chlorostyrene, butadiene, isoprene, pentadiene, acrylic acid, methacrylic acid, methyl methacrylate, vinyl acetate, acrylonitrile, methyl vinyl ketone or combinations thereof.

5. Process according to one of Claims 1 to 4 wherein polycarbonatepolyols are used.

6. Polymer dispersion obtainable according to one of Claims 1 to 5.

7. Use of polymer dispersions according to Claim 6 for the preparation of polyurethanes.

8. Shoe soles containing the reaction product of polymer dispersions according to Claim 6 with polyisocyanates.

## Revendications

1. Procédé pour la préparation de dispersions de polymères dans des polyesterpolyols par polymérisation radicalaire de monomères oléfiniquement insaturés dans des polyesterpolyols sans groupe oléfiniquement insaturé en présence d'un composé méthylène doublement activé sans groupe oléfiniquement insaturé.

2. Procédé selon la revendication 1, dans lequel le composé méthylène doublement activé de la formule générale
R¹-CH₂-R²
suffit, dans lequel R¹ et R² sont des restes identiques ou différents choisis parmi des substituants attirant inductivement des électrons.

3. Procédé selon la revendication 2, dans lequel R¹ et R² représentent indépendamment -CONH₂, -CN ou -COOR³, où R³ est un groupe alkyle.

4. Procédé selon l'une quelconque des revendications 1 à 3, dans lequel on utilise comme monomères oléfiniquement insaturés le styrène, l'α-méthylstyrène, l'éthylstyrène, le vinyltoluène, le divinyl-benzène, l'isopropylstrol, le chlorostyrène, le butadiène, l'isoprène le pentadiène, l'acide acrylique, l'acide méthacrylique, un ester méthylique d'acide méthacrylique, l'acétate de vinyle, l'acrylonitrile, la méthylvinyl-cétone ou des combinaisons de ceux-ci.

5. Procédé selon l'une quelconque des revendications 1 à 4, dans lequel on utilise des polycarbonatepolyols.

6. Dispersion de polymère obtenue selon l'une quelconque des revendications 1 à 5.

7. Utilisation de dispersions de polymères selon la revendication 6 pour la préparation de polyuréthanes.

8. Semelle de chaussure contenant le produit de réaction de dispersions de polymères selon la revendication 6 avec des polyisocyanates.
